# EUROPÄISCHE PATENTSCHRIFT

(11) **EP 1 169 954 B1**
(45) Veröffentlichungstag und Bekanntmachung des Hinweises auf die Patenterteilung: **31.03.2004**
(21) Anmeldenummer: 01115396.2
(22) Anmeldetag: 26.06.2001
(51) Int. Cl.: A47J 27/21

(54) **Elektrischer Wasserkocher mit einer Einfüllöffnung im Deckel**
Electrical boiler with a filling opening in the lid
Bouilloire électrique avec une ouverture de remplissage dans le couvercle

(30) Priorität: 27.06.2000 DE 10031169
(43) Veröffentlichungstag der Anmeldung: 09.01.2002
(73) Patentinhaber: BSH Bosch und Siemens Hausgeräte GmbH, 81739 München (DE)
(72) Erfinder: Magg, Johannes, 83368 St. Georgen (DE); Kramer, Siegmund, 83417 Kirchanschöring (DE)

(56) Entgegenhaltungen:
- FR-A- 2 743 285
- GB-A- 211 087
- GB-A- 302 120
- GB-A- 2 327 333

## Beschreibung

Die vorliegende Erfindung betrifft einen elektrischen Wasserkocher mit einer Einfüllöffnung im Deckel.

Handelsübliche elektrische Wasserkocher werden über die Ausgießöffnung oder über den geöffneten Deckel befüllt. Beides ist kompliziert und bedarf zusätzlicher Bedienfunktion. Auch ist eine Einhandbedienung nicht immer gewährleistet. Diese Wasserkocher können auch mit zusätzlichen separaten Filtereinrichtungen, die im Innem des Wasserbehälters angeordnet sind, ausgerüstet sein, z. B. EP 897 686 A1, WO 96/22045 A1. Diese Einbauten schränken stark die Handlichkeit des Wasserkochers ein und beschränken seine Kapazität.

In der WO 95/13733 ist eine Lösung beschrieben, bei der das Befüllen über eine separate nicht verschließbare Öffnung im Deckel erfolgt, hinter der im Innern des Wasserkochers ein Filterelement angeordnet ist. Nachteil dieser Lösung ist ein möglicher Energieverlust beim Aufheizen des Wassers durch die Öffnung und die Anordnung des Filterelementes im Innern, die durch Temperatur und Wasserdampfbelastung nur den Einsatz bestimmter Filtermaterialien zuläßt. Auch läßt sich ein Eintauchen des Filterelementes in das aufzuheizende Wasser und damit ebenfalls verbundene Einschränkung des Einsatzes von Filtermaterial bei dieser Anordnung des Filterelementes nur durch Inkaufnahme eines großen Kapazitätsverlustes verhindern.

Der Stand der Technik bietet darüber hinaus eine Vielzahl von Lösungen, bei denen im Innern des Wasserkochers Filter vor der Ausgießöffnung angeordnet werden. Diese Lösungen bieten alle vorher genannten Nachteile des bisher aufgezeigten Standes der Technik. Zu diesem Stand der Technik gehören u.a. DE 94 19 708 U1, GB 2 279 233 A, GB 2 280 596 A und EP 676 161 B1.

Aus der GB 2 327 333 A ist ein Wasserkocher gemäß dem Oberbegriff des Anspruchs 1 bekannt, bei dem durch das Drücken einer Betätigungsvorrichtung eine Öffnung im Deckel zur Befüllung des Wasserkochers geöffnet werden kann.

Aufgabe der vorliegenden Erfindung war, eine Lösung zu schaffen, die das einfache und komfortable Befüllen eines elektrischen Wasserkochers gewährleistet.

Erfindungsgemäß wurde die Aufgabe dadurch gelöst, daß ein elektrischer Wasserkocher mit einer Einfüllöffnung im Deckel entwickelt wurde, die durch ein Abdeckelement verschlossen ist. Das Abdeckelement wirkt mit einem in Schließrichtung vorgespannten Rückhalteelement zusammen, das ein Verschließen der Einfüllöffnung sichert.

Beim Befüllen des elektrischen Wasserkochers wird durch den Wasserdruck, der gegen die Kraft des Rückhalteelements wirkt, das Abdeckelement selbsttätig geöffnet, wodurch ohne zusätzliche Handgriffe ein einfaches und komfortables Befüllen des elektrischen Wasserkochers ermöglicht wird.

Zum Zweck des Befüllens des elektrischen Wasserkochers mit reinem ablagerungsfreiem Wasser kann in der Einfüllöffnung oberhalb des Abdeckelementes, d. h. außerhalb des elektrischen Wasserkochers ein Filterelement angeordnet werden, das beim Befüllen des elektrischen Wasserkochers Schwebstoffe, chemische Verunreinigungen und Stoffe, die zu mineralischen Ablagerungen im elektrischen Wasserkocher führen können, zurückhält.

Vorteilhaft an dieser Filteranordnung ist, daß neben der Verbesserung der Wasserqualität ein Verschmutzen im Innern des elektrischen Wasserkochers und insbesondere an den Heizelementen verhindert bzw. stark reduziert wird. Dadurch werden Lebensdauer und Wartungsintervalle zur Reinigung des elektrischen Wasserkochers entscheidend verlängert. Weitere Vorteile der erfindungsgemäßen Anordnung des Filterelementes außerhalb des elektrischen Wasserkochers sind, daß zum einen Filterstoffe eingesetzt werden können, die nur kurzzeitig bzw. nicht permanent mit Trinkwasser in Kontakt kommen dürfen und zum anderen die Wirksamkeit der Filterstoffe durch Temperatur und/oder Wasserdampf nicht beeinträchtigt wird.

Nachfolgend werden anhand schematischer Darstellungen zwei Ausführungsbeispiele des erfindungsgemäßen elektrischen Wasserkochers beschrieben. Es zeigen:
- Fig. 1: eine schematische Ansicht des Oberteils eines elektrischen Wasserkochers mit geschlossener Einfüllöffnung im Deckel und Filterelement;
- Fig. 2: eine schematische Ansicht des Oberteils eines elektrischen Wasserkochers mit offener Einfüllöffnung im Deckel und Filterelement;
- Fig. 3: eine schematische Ansicht des Oberteils eines elektrischen Wasserkochers mit geschlossener Einfüllöffnung im Deckel ohne Filterelement;
- Fig. 4: eine schematische Ansicht des Oberteils eines elektrischen Wasserkochers mit offener Einfüllöffnung im Deckel ohne Filterelement.

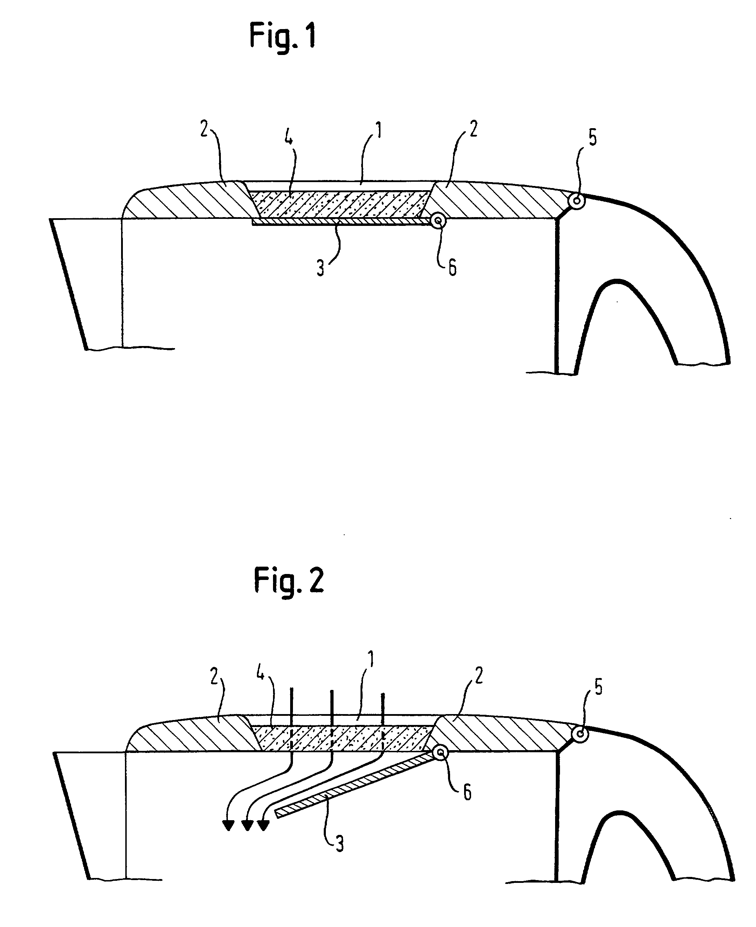

In Fig. 1 ist schematisch das Oberteil eines erfindungsgemäßen elektrischen Wasserkochers mit einer Einfüllöffnung 1 im Deckel 2, einem Abdeckelement 3 und einem Filterelement 4 dargestellt, wobei das Abdeckelement 4 geschlossen ist. Der Deckel 2 ist in dieser Ausführungsform um die Drehachse 5 aufklappbar, um gegebenenfalls Wartungsarbeiten im elektrischen Wasserkocher z. B. an den nicht dargestellten Heizelementen vorzunehmen. Es sind auch andere Formen eines entfernbaren Deckels einsetzbar. Das Abdeckelement 3 ist in dieser bevorzugten Ausführungsform als Abdeckplatte ausgeführt, die sich um die Drehachse 6 ins Innere des elektrischen Wasserkochers öffnen läßt. Das Abdeckelement 3 ist durch ein nicht dargestelltes Rückhalteelement, z. B. Feder, Gegengewicht usw., in Schließrichtung so vorgespannt, daß es, wie in Fig. 1 dargestellt, geschlossen ist.

Ein Filterelement 4 ist bevorzugt in der Eintrittsöffnung 1 angeordnet. Das Filterelement kann z. B. in einem nicht dargestellten Filtereinsatz angeordnet werden, der in eine nicht dargestellte lösbare Verbindung in die Einfüllöffnung 1 des Deckels 2 eingebracht werden kann. Als solche Verbindung bieten sich bekannte Lösungen wie z. B. Schraub-, Steckoder Rastverbindungen an. Alternativ sind auch Lösungen denkbar, bei denen das Filterelement 4 in einem zusätzlichen trichterförmigen Bauteil angeordnet ist, wobei das trichterförmige Bauteil über eine der bereits erwähnten möglichen lösbaren Verbindungen in der Einfüllöffnung 1 des Deckels 2 angeordnet wird.

Vorteile der erfindungsgemäßen Anordnung des Filterelementes 4 außerhalb des elektrischen Wasserkochers bestehen darin, daß das Filterelement nur während des Befüllens mit dem Wasser in Kontakt kommt und eine thermische Belastung des Filtermaterials vermieden wird. Dadurch sind neben bekannten Filterstoffen für die Verbesserung der Wasserqualität, wie Aktivkohle, lonenaustauscherharzen u. a., z. B. auch Phosphatverbindungen einsetzbar, die aufgrund gesetzlicher Regelung nicht längere Zeit im Trinkwasser eingesetzt werden dürfen. Die Reinigung des Wassers vor dem Einfüllen in den elektrischen Wasserkocher bringt neben der verbesserten Wasserqualität auch den Vorteil, daß ein Verschmutzen im Inneren des elektrischen Wasserkochers und damit insbesondere an den Heizelementen verhindert bzw. je nach eingesetztem Filtermaterial stark reduziert werden kann.

In Fig. 2 wird die in Fig. 1 dargestellte und erläuterte Ausführungsform der Erfindung mit geöffnetem Abdeckelement 3 dargestellt. Beim Befüllen des elektrischen Wasserkochers öffnet sich das vorgespannte als Abdeckplatte ausgeführte Abdeckelement 3 durch den gegen das nicht dargestellte in Schließrichtung vorgespannte Rückhalteelement wirkenden Wasserdrucks selbsttätig. Dadurch gelangt das Wasser durch das Filterelement 4 gereinigt in den elektrischen Wasserkocher. Für den Fall, daß die Wassermenge beim Befüllen so gering ist, daß die Abdeckklappe insbesondere in der erfindungsgemäßen Ausführungsform mit dem Filterelement 4 nicht aufgedrückt werden kann, z. B. bei einem sehr geringen Wasserstrahl oder beim Schließen des Wasserhahns, ist das Abdeckelement 3 mit einem nicht dargestellten Bypass ausgerüstet, der einen Rückstau des Wassers verhindert. Dieser Bypass ist so ausgelegt, daß die bei modernen elektrischen Wasserkochern vorhandene Dampfabschaltung nicht beeinflußt wird. Nach dem Befüllen schließt sich die Abdeckklappe im Zusammenwirken mit dem nicht dargestellten in Schließrichtung vorgespannten Rückhalteelement selbsttätig.

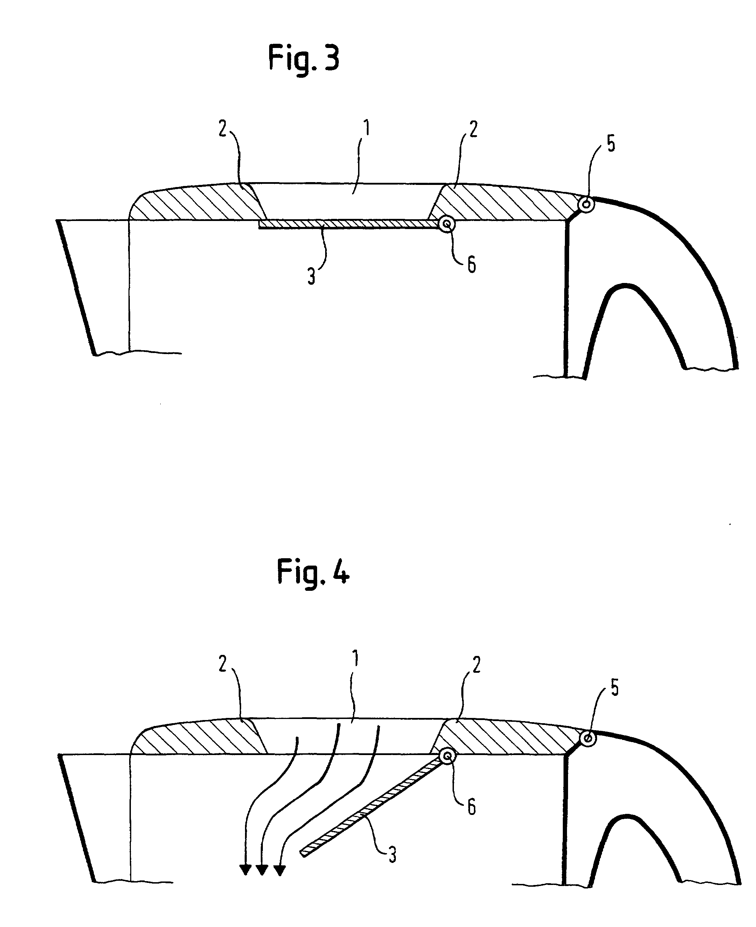

Eine weitere Ausführungsform ohne die erfindungsgemäße Anordnung des Filterelements 4, z. B. für den Fall einer vorliegenden guten Wasserqualität oder des Einsatzes von ausschließlich gereinigtem Wasser, wird in den Figuren 3 mit geschlossenem und 4 mit offenem Abdeckelement 3 dargestellt. Die Funktionsweise dieser Ausführungsform ist die gleiche wie bei der Ausführungsform, die in den Figuren 1 und 2 beschrieben wurde, nur daß das Wasser beim Einfüllen direkt durch die Einfüllöffnung 1 im Deckel 2 auf das Abdeckelement 3 wirkt. Bei dieser Ausführungsform könnte auf die Fig. 2 erläuterte Bypassanordnung in dem Abdeckelement 3 verzichtet werden. Aus fertigungstechnischen Gründen, Vermeiden zweier Bauteile, und aus Gründen der Möglichkeit des Nachrüstens mit dem Filterelement 4 wird dies in der Praxis jedoch unterbleiben. Auch in dieser Ausführungsform ist das Abdeckelement 3 wie zu Fig. 1 und 2 beschrieben, als Abdeckklappe ausgeführt.

Die bevorzugte Ausführung des Abdeckelementes 3 als Abdeckklappe, wie in den Beispielen in Fig. 1 bis 4 beschrieben, schränkt nicht weitere Ausgestaltungsmöglichkeiten des Abdeckelementes 3 ein. Es sind auch Lösungen denkbar mit einer schrägen in Führung verlaufenden Abdeckplatte oder sich überlappenden Schließplättchen, die sich konzentrisch öffnen bzw. schließen, jeweils ausgelöst durch den Wasserdruck beim Einfüllen des Wassers durch die Einfüllöffnung in den elektrischen Wasserkocher.

## Patentansprüche

1. Elektrischer Wasserkocher mit einer Einfüllöffnung im Deckel, **dadurch gekennzeichnet, daß** zum Schließen der Einfüllöffnung (1) im Deckel (2) ein Abdeckelement (3) angeordnet ist, daß beim Befüllen des elektrischen Wasserkochers durch den Wasserdruck selbsttätig geöffnet wird.

2. Elektrischer Wasserkocher mit einer Einfüllöffnung im Deckel nach Anspruch 1, **dadurch gekennzeichnet, daß** als Abdeckelement (3) eine bewegliche Abdeckklappe um eine Drehachse (6) an geordnet ist, die mit einem in Schließrichtung vorgespannten Rückhalteelement in Wirkverbindung steht.

3. Elektrischer Wasserkocher mit einer Einfüllöffnung im Deckel nach Anspruch 1 und 2, **dadurch gekennzeichnet, daß** an der als Abdeckelement (3) angeordneten Abdeckklappe ein Bypass angeordnet ist.

4. Elektrischer Wasserkocher mit einer Einfüllöffnung im Deckel nach Anspruch 1 bis 3, **dadurch gekennzeichnet, daß** in der Einfüllöffnung (1) des Deckels (2) oberhalb des Abdeckelements (3) ein Filterelement (4) angeordnet ist.

## Claims

1. Electric kettle with a filling opening in the lid, **characterised in that** a cover element (3), which is automatically opened by the water pressure during filling of the electric kettle, is arranged for closing the filling opening (1) in the lid (2).

2. Electric kettle with a filling opening in the lid according to claim 1, **characterised in** a cover flap movable about a rotational axle (6), which is disposed in operative connection with a restraining element biased in closing direction, is arranged as cover element (3).

3. Electric kettle with a filling opening in the lid according to claim 1 and 2, **characterised in that** a bypass is arranged at the cover flap arranged as cover element (3).

4. Electric kettle with a filling opening in the lid according to claim 1 to 3, **characterised in that** a filter element (4) is arranged in the filling opening (1) of the lid (2) above the cover element (3).

## Revendications

1. Bouilloire électrique avec une ouverture de remplissage dans le couvercle, **caractérisée en ce qu'**un élément de couverture (3) est situé dans le couvercle (2) pour fermer l'ouverture de remplissage (1), lequel élément s'ouvre automatiquement sous l'effet de la pression de l'eau lors du remplissage de la bouilloire électrique.

2. Bouilloire électrique avec une ouverture de remplissage dans le couvercle selon la revendication 1, **caractérisée** en qu'un volet de couverture mobile servant d'élément de couverture (3) est placé autour d'un axe de rotation (6) et est relation active avec un élément de retenue précontraint dans la direction de fermeture.

3. Bouilloire électrique avec une ouverture de remplissage dans le couvercle selon les revendications 1 et 2, **caractérisée en ce qu'**une dérivation se situe au niveau du volet de couverture servant d'élément de couverture (3).

4. Bouilloire électrique avec une ouverture de remplissage dans le couvercle selon les revendications 1 à 3, **caractérisée en ce qu'**un élément filtrant (4) est situé dans l'ouverture de remplissage (1) du couvercle (2), au-dessus de l'élément de couverture (3).
